# FASCICULE DE BREVET EUROPEEN

(11) **EP 3 225 546 B1**
(45) Date de publication et mention de la délivrance du brevet: **11.07.2018**
(21) Numéro de dépôt: 17156220.0
(22) Date de dépôt: 15.02.2017
(51) Int. Cl.: B64D 47/02, B64D 43/02, B64C 39/02, B64C 1/00, B64D 47/08

(54) **DRONE, NOTAMMENT DE TYPE AILE VOLANTE, MUNI D'UN ELEMENT DE SUPERSTRUCTURE MULTIFONCTION**
DROHNE, INSBESONDERE VOM TYP NUR-FLÜGEL-FLUGZEUG, DIE MIT EINEM MULTIFUNKTIONS-SUPERSTRUKTURELEMENT AUSGESTATTET IST
DRONE, IN PARTICULAR OF THE FLYING WING TYPE, PROVIDED WITH A MULTIFUNCTION SUPERSTRUCTURE ELEMENT

(30) Priorité: 15.03.2016 FR 1652148
(43) Date de publication de la demande: 04.10.2017
(73) Titulaire: Parrot Drones, 75010 Paris (FR)
(72) Inventeur: DONNARD, Maël, 75007 Paris (FR); PIRAT, Frédéric, 75011 Paris (FR); SEYDOUX, Henri, 75017 PARIS (FR)
(74) Mandataire: Dupuis-Latour, Dominique

(56) Documents cités:
- WO-A2-2013/062608
- US-A1- 2014 099 853
- Anonymous: "eBee senseFly Extended User Manual", , 30 avril 2015 (2015-04-30), XP055304129, Extrait de l'Internet: URL:https://www.sensefly.com/fileadmin/use r_upload/sensefly/documents/manuals/Extend ed_User_Manual_eBee_and_eBee_Ag_v16.pdf [extrait le 2016-09-20]
- 01netTV: "Parrot Disco : l'aile télécommandée géante - CES 2016", youtube, 4 janvier 2016 (2016-01-04), page 1 pp., XP054976785, Extrait de l'Internet: URL:https://www.youtube.com/watch?v=BoL_49 Btw5U [extrait le 2016-09-21]

## Description

L'invention concerne les appareils motorisés volants pilotés à distance, ci-après désignés généralement sous la dénomination de "drones".

L'invention s'applique avantageusement aux drones à voilure fixe, notamment de type "aile volante" tel que par exemple le modèle *eBee* de SenseFly, Cheseaux-Lausanne, Suisse, qui est un drone de cartographie professionnelle de terrain équipé d'une caméra à visée verticale, utilisé notamment en agronomie pour le suivi des cultures agricoles.

Ce drone et son mode opératoire sont notamment décrits dans le document "eBee SenseFly Extended User Manual", daté 30 avril 2015.

L'invention peut s'appliquer également à d'autres types de drones, par exemple les drones à voilure tournante tels que les quadricoptères, dont un exemple typique est le *Bebop* de Parrot SA, Paris, France, qui est un drone équipé de deux caméras frontale et verticale.

Ces drones disposent d'un très grand nombre de fonctionnalités et mettent en oeuvre une multiplicité de capteurs et de boucles d'asservissement pour leur pilotage et le contrôle de leur trajectoire en vol. Cette complexité doit toutefois être la moins apparente possible pour l'utilisateur, afin que celui-ci puisse principalement se concentrer sur son plan de vol sans se soucier des automatismes gérés en interne par le drone.

La simplicité de la mise en oeuvre du drone est donc une caractéristique particulièrement importante à prendre en compte lors de la conception d'un drone et de la définition de son ergonomie vis-à-vis de l'utilisateur. D'autre part, tout particulièrement pour les drones de type aile volante qui peuvent évoluer à des vitesses élevées (typiquement jusqu'à 80 km/h), le facteur aérodynamique est une autre caractéristique importante, et il convient de réduire le plus possible la trainée introduite par les éléments de superstructure rapportés sans rôle aérodynamique tels que capteurs externes, boutons de commande, accessoires, etc.

D'autres contraintes importantes sont également à prendre en compte, telles que notamment la masse du drone (dont il faut alléger le plus possible les éléments qui le constituent) et sa robustesse (les risques de chocs et chutes sont élevés, avec des conséquences d'autant plus importantes que la vitesse du drone est élevée). On notera à cet égard que faible masse et robustesse élevée sont généralement des impératifs contradictoires, qui impliquent souvent des choix de conception restreints.

Le but de la présente invention est de proposer un tel drone muni d'un élément de superstructure particulier permettant de répondre au mieux à ces divers impératifs, par une intégration poussée de diverses fonctions, avec une ergonomie simplifiée pour l'utilisateur, une robustesse maximale à l'encontre des chocs et chutes, et une incidence minimale sur les performances aérodynamiques du drone.

L'invention propose à cet effet un drone volant comportant de manière en elle-même connue, décrite notamment dans le document "eBee SenseFly Extended User Manual" précité, un fuselage et un élément de superstructure comprenant une pièce tubulaire aplatie apte à être montée de manière saillante par rapport au fuselage du drone. Cette pièce tubulaire comprend : une extrémité proximale comportant des moyens de montage sur le drone ; une extrémité distale libre avec une prise d'air frontale de pression dynamique de sonde de Pitot ; un conduit interne en communication de fluide avec la prise d'air frontale, ce conduit ayant un orifice formé sur l'extrémité proximale et apte à être relié à un capteur de pression monté dans un module configuré dans le fuselage du drone ; et un guide de lumière en communication lumineuse avec un organe luminescent monté au voisinage ou au niveau de l'extrémité proximale de la pièce tubulaire.

De façon caractéristique de l'invention, la pièce tubulaire est une pièce mobile par rapport au fuselage entre deux positions prédéterminées, la pièce tubulaire comportant à son extrémité proximale des moyens de couplage mécanique à un contacteur monté dans le module, les moyens de couplage étant aptes à activer le contacteur entre deux états différents correspondant auxdites deux positions respectives.

Selon diverses caractéristiques subsidiaires avantageuses :
- la pièce tubulaire est une pièce mobile en translation verticale entre lesdites deux positions prédéterminées suivant une direction normale au fuselage dans la région de l'extrémité proximale ;
- la pièce tubulaire comprend deux parties emboitées de manière séparable dans le prolongement l'une de l'autre, avec une partie de base liée de façon permanente au module et portant lesdits moyens de couplage mécanique au contacteur, et une partie saillante amovible surmontant la partie de base et comportant la prise d'air frontale et le conduit interne ;
- la partie de base et la partie saillante coopèrent par emboitement avec un ajustement fonctionnel autorisant leur dissociation mutuelle en cas de contrainte extérieure excessive subie par la partie saillante ;
- la partie de base s'étend partiellement à l'intérieur du module et partiellement à l'extérieur du module, et la partie saillante s'étend totalement à l'extérieur du module, la partie de base pouvant s'étendre totalement à l'intérieur du fuselage ;
- la partie de base comprend un support pour ledit organe luminescent, la partie saillante pouvant être une partie en un matériau translucide ou transparent formant ledit guide de lumière, différent du matériau formant la partie de base ;
- l'orifice du conduit interne débouche de la pièce tubulaire vers le volume intérieur du module au niveau de la liaison de la partie saillante à la partie de base.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue d'ensemble montrant un drone à voilure fixe de type aile volante, évoluant dans les airs sous le contrôle d'un équipement de télécommande distant.
La Figure 2 est une vue perspective de la partie avant du drone de l'invention, montrant la partie émergente de l'élément de superstructure.
La Figure 3 est une vue perspective montrant, extrait du fuselage du drone de l'invention, le module interne du drone avec l'élément de superstructure.
La Figure 4 est une vue en élévation latérale de l'élément de superstructure du drone de l'invention, pris isolément.
La Figure 5 est une vue en coupe latérale de l'élément de superstructure du drone de l'invention, en situation avec les différents éléments de la partie avant du module interne du drone où est monté cet élément de superstructure.

On va maintenant décrire un exemple de réalisation et de mise en oeuvre de l'invention.

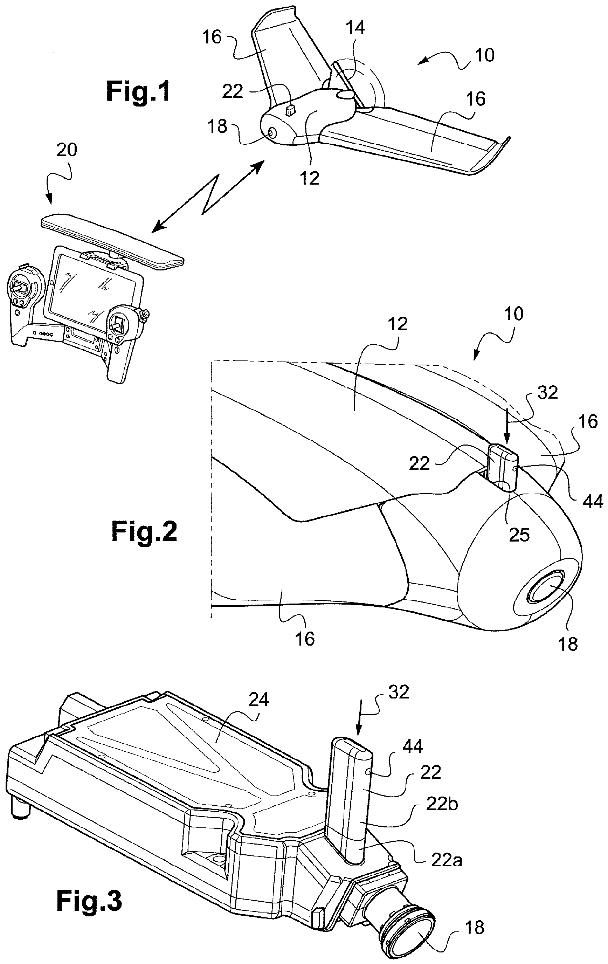

Sur la Figure 1, on a illustré un drone 10, par exemple un drone à voilure fixe tel que le *eBee* de SenseFly.

Ce drone 10 comprend un fuselage 12 muni en partie arrière d'une hélice de propulsion 14 et latéralement de deux ailes 16, ces ailes pouvant éventuellement faire corps avec le fuselage 12 dans une configuration de type "aile volante". Une caméra frontale 18 permet d'obtenir une image de la scène vers laquelle progresse le drone.

Le drone 10 est piloté par un appareil de télécommande distant 20 pourvu d'un écran tactile affichant l'image captée par la caméra 18 ainsi que diverses commandes de pilotage à disposition de l'utilisateur. L'appareil de télécommande 20 est pourvu de moyens de liaison radio avec le drone, par exemple du type réseau local WiFi (IEEE 802.11) pour l'échange bidirectionnel de données, du drone 10 vers l'appareil 20 notamment pour la transmission de l'image captée par la caméra 18, et de l'appareil 20 vers le drone 10 pour l'envoi de commandes de pilotage.

Comme illustré Figure 2, le drone 10 comporte en partie avant un élément de superstructure 22 faisant saillie en direction radiale perpendiculairement au fuselage 12. Cet élément de superstructure 22 se présente extérieurement sous la forme d'une pièce tubulaire aplatie s'étendant approximativement dans un plan longitudinal médian du fuselage, en présentant le côté le plus étroit face à la direction de progression du drone de manière à introduire une trainée la plus faible possible.

La Figure 3 illustre le module électronique principal 24 du drone, extrait du fuselage dans lequel il est logé et qui joue pour ce module le rôle d'enveloppe de protection.

L'élément de superstructure 22 s'étend à partir du module 24, dont il constitue un prolongement. Lorsque le module 24 est enfermé dans le fuselage 12, seule la partie supérieure de l'élément 22 fait saillie au travers d'une ouverture 25 du fuselage (Figure 2), la partie inférieure de l'élément 22 et la totalité du module 24 restant enfermés dans le fuselage et protégés par celui-ci.

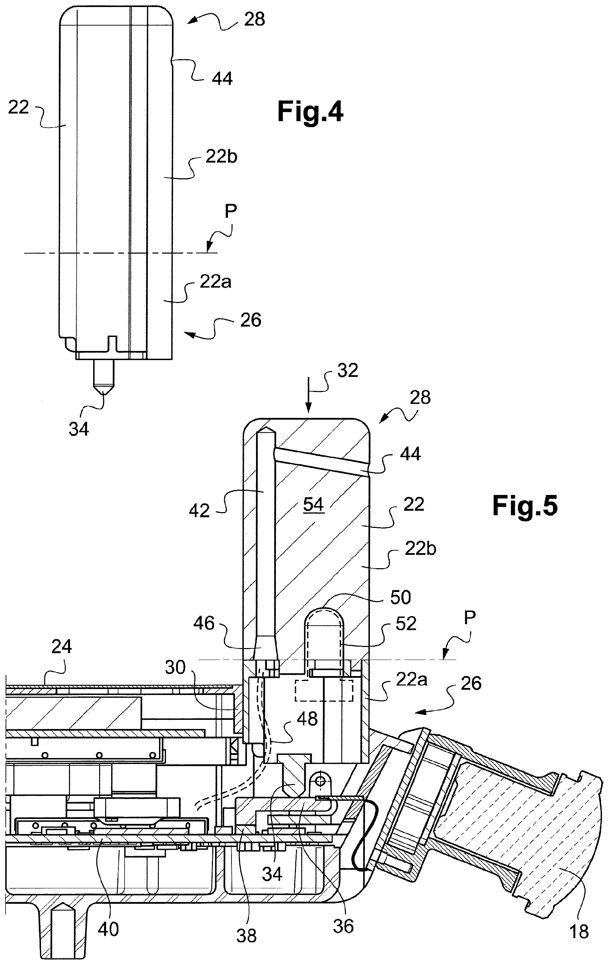

Les Figures 4 et 5 montrent plus en détail la structure de l'élément de superstructure 22, isolément (Figure 4) et avec les différents éléments de la partie avant du module 24 où est monté cet élément 22 (Figure 5).

L'élément de superstructure 22 comprend une extrémité proximale 26, du côté du module, et une extrémité distale 28, libre, correspondant à la partie émergente s'étendant en saillie au-dessus du fuselage du drone. Très avantageusement, l'élément 22 est formé de deux parties emboitées dans le prolongement l'une de l'autre, avec une partie de base 22a, côté proximal, reliée au module 24, et une partie saillante amovible 22b, côté distal, surmontant la partie de base 22a. Ces deux parties 22a et 22b s'étendent de part et d'autre d'un plan P et sont emboitées ensemble avec un ajustement fonctionnel autorisant leur dissociation mutuelle en cas de contrainte extérieure excessive subie par la partie saillante 22. Par exemple, en cas de choc subi par le drone, la partie 22, qui fait saillie hors du fuselage, pourra être éjectée et remplacée si elle est endommagée, tandis que la partie de base 22a, située à l'intérieur du fuselage, restera en place avec le module 24, qui ne sera de ce fait pas endommagé par le choc.

La partie de base 22a est montée dans le module 24 dans un orifice de guidage 30 autorisant un déplacement en translation verticale suivant une direction perpendiculaire au fuselage, par exemple sous l'effet d'un appui (flèche 32) exercé sur l'extrémité distale 28 par un utilisateur (la direction "verticale" étant entendue avec la représentation des Figures 4 et 5, c'est-à-dire dans un plan radial par rapport à l'axe principal du drone et du module 24).

La partie de base 22a est munie en partie inférieure d'un élément formant poussoir 34 venant en appui sur un levier articulé 36 dont l'extrémité sollicite un contacteur électrique 38 monté sur la carte de circuit imprimé 40 du module 24. Un appui (flèche 32) sur l'extrémité distale de l'élément de superstructure 22 aura ainsi pour effet d'actionner le contacteur 38, et le relâchement de cet appui, le retour du contacteur 38 à sa position de repos initiale. Des moyens élastiques de rappel (non représentés) sont prévus pour solliciter vers le haut l'élément de superstructure 22 dans l'orifice de guidage 30 et permettre l'actionnement du contacteur 40, qui est de type fugitif, seulement pendant la durée de l'appui sur l'extrémité de l'élément de superstructure 22.

La partie saillante 22b comprend un conduit interne 42 s'étendant sur sa longueur et débouchant, côté distal, par une prise d'air frontale 44 et, côté proximal, par un débouché 46.

La prise d'air frontale 44 est orientée face à la direction de progression du drone. Elle est située dans la partie de l'élément de superstructure 22 qui émerge du fuselage, et dans une région de l'extrémité distale 28 qui lui permet de se situer à distance de la surface du fuselage, comme on peut le voir notamment sur la Figure 2.

La prise d'air frontale 44 est une prise d'air de pression dynamique de sonde de Pitot. La pression recueillie au niveau de la prise 44 est transmise par le conduit interne 42 jusqu'au débouché 46 puis, par une liaison souple 48, à un capteur de pression monté sur la carte de circuit imprimé 40, où est par ailleurs monté un autre capteur pour la mesure de la pression statique, le différentiel entre pression statique et pression dynamique permettant d'obtenir une mesure de la vitesse du drone par rapport à l'air (vent relatif). On notera que pour éviter les erreurs de mesure liées aux vibrations en vol, il est souhaitable de limiter la mobilité de l'élément de superstructure 22, qui porte la prise d'air de la sonde de Pitot.

La partie saillante 22b de l'élément de superstructure 22 comporte par ailleurs une cavité 50 du côté où elle est emboitée sur la partie de base 22a. Cette cavité 50 loge la tête d'une diode électroluminescente 52 dont la base est montée et supportée par la partie de base 22a. Le matériau 54 de la partie saillante 22b est un matériau transparent ou translucide, par exemple un polycarbonate, permettant à cette partie saillante 22b de jouer le rôle d'un guide de lumière pour l'élément de superstructure 22, l'activation de la diode 52 venant illuminer la partie saillante 22b et notamment sa partie qui en émerge du fuselage, tandis que la diode 52 reste logée à l'intérieur du fuselage où elle s'y trouve protégée. L'élément de superstructure dont on vient de décrire l'agencement permet de combiner plusieurs fonctions de manière avantageuse, tant pour l'utilisateur qu'au niveau de la conception du drone.

En premier lieu, il permet de mettre en oeuvre le drone par actionnement de la partie saillante 22b, sans qu'il soit nécessaire de retourner le drone pour actionner un commutateur, ni d'ouvrir une trappe, etc., comme cela est le cas avec les drones actuels de type aile volante de l'état de la technique.

La mise en route du drone de l'invention se fait par appui (flèche 32) sur l'extrémité libre de l'élément de superstructure 22, ce qui a pour effet d'actionner le contacteur 38. Cette manoeuvre entraine l'envoi au processeur du module 24 d'un signal qui déclenchera le réveil des circuits, la mise sous tension de l'alimentation de puissance, etc. et la vérification que toutes les conditions sont remplies pour le lancement en vol. De même, après l'atterrissage, il suffit à l'utilisateur d'appuyer à nouveau sur l'extrémité libre de l'élément de superstructure 22 pour générer une interruption qui, transmise au processeur, commandera l'extinction des circuits après que le processeur aura vérifié qu'il s'agit bien là de l'action à déclencher (altitude et vitesse nulles, etc.) - a contrario, si l'élément 22 est sollicité en vol par exemple après avoir touché un arbre, il s'agit là d'un actionnement inopiné qui doit être détecté (altitude et vitesse non nulles) et ne pas entrainer d'arrêt immédiat du drone.

La fonction de guide de lumière procure à l'utilisateur un retour visuel sur l'état du drone, par allumage/extinction de la diode électroluminescente 52 située à l'intérieur de ce fuselage mais visible depuis l'extérieur du fuselage par le guide de lumière 54, le cas échéant avec utilisation de différentes couleurs en fonction des différents états possibles du drone (éteint, prêt à décoller, anomalie de fonctionnement, etc.).

Enfin, la prise d'air frontale 44 disposée dans la région la plus distale de la partie émergente de l'élément de superstructure 22, à distance du fuselage, assure une excellente captation de la pression dynamique, dans un flux laminaire qui n'est pas perturbé par les effets de turbulences et de couche limite présents à la surface du fuselage du drone.

On soulignera que ces divers avantages sont obtenus avec un élément de superstructure qui ne présente qu'une faible trainée, qui est donc très peu perturbateur, tout en étant d'une structure mécanique particulièrement robuste et légère.

L'élément de superstructure 22 permet au module 24, qui reste enfermé dans la structure mécanique du fuselage et protégé par celle-ci, d'avoir accès au monde extérieur pour trois fonctions principales, à savoir i) l'allumage/extinction des circuits du drone, ii) la délivrance d'une information visuelle à l'utilisateur sur l'état du drone, et iii) la mise à disposition d'une prise d'air de pression dynamique de sonde de Pitot afin de mesurer la vitesse air du drone lorsque celui-ci est en mouvement.

L'élément de superstructure 22 selon l'invention permet ces interactions du module 24 avec le monde extérieur sans que l'utilisateur n'ait à manipuler le module électronique, qui reste soigneusement confiné et protégé dans la structure mécanique du drone, tout en rendant accessibles ces trois fonctions depuis l'extérieur du drone, et ceci par une seule et même pièce apparente à l'extérieur du drone.

Enfin, le caractère séparable de la partie saillante 22b d'avec la partie de base 22a montée sur le module 24 fait en sorte que, même en cas de choc violent, les éléments les plus fragiles restent protégés. Ces éléments sont : la diode électroluminescente 52, la liaison 48 entre le conduit interne communiquant avec la prise d'air frontale 44 et le capteur de pression monté sur la carte de circuit imprimé 40, le système de support mobile et de guidage de la partie de base 22a dans l'orifice 30, ainsi que le système de manoeuvre du contacteur 38. Ces éléments sont tous reliés directement ou indirectement à la partie de base 22a mais pas à la partie saillante amovible 22b, et ils restent par ailleurs tous situés à l'intérieur du fuselage 12 où ils s'y trouvent protégés. En cas de choc, seul sera éjectée ou brisée la partie saillante 22b, qui n'est qu'une pièce moulée monobloc aisément remplaçable, ne comportant aucun élément rapporté.

## Revendications

1. Un drone volant (10) comprenant un fuselage (12) et un élément de superstructure comprenant une pièce tubulaire aplatie (22) montée de manière saillante par rapport au fuselage du drone, la pièce tubulaire (22) comprenant :
- une extrémité proximale (26) comprenant des moyens de montage sur le drone ;
- une extrémité distale libre (28) avec une prise d'air frontale de pression dynamique de sonde de Pitot (44) ;
- un conduit interne (42) en communication de fluide avec la prise d'air frontale (44), ce conduit ayant un orifice (46) formé sur l'extrémité proximale et relié à un capteur de pression monté dans un module (24) configuré dans le fuselage (12) du drone ; et
- un guide de lumière (54) en communication lumineuse avec un organe luminescent (52) monté au voisinage ou au niveau de l'extrémité proximale (26) de la pièce tubulaire (22), **caractérisé en ce que** la pièce tubulaire (22) est une pièce mobile par rapport au fuselage (12) entre deux positions prédéterminées, la pièce tubulaire (22) comportant à son extrémité proximale des moyens (34) de couplage mécanique à un contacteur (38) monté dans le module (24), les moyens (34) de couplage étant aptes à activer le contacteur (38) entre deux états différents correspondant auxdites deux positions respectives.

2. Le drone de la revendication 1, dans lequel la pièce tubulaire (22) est une pièce mobile en translation verticale (32) entre lesdites deux positions prédéterminées suivant une direction normale au fuselage (12) dans la région de l'extrémité proximale (26).

3. Le drone de la revendication 1, dans lequel la pièce tubulaire (22) comprend deux parties (22a, 22b) emboitées de manière séparable dans le prolongement l'une de l'autre, avec :
- une partie de base (22a) liée de façon permanente au module (24) et portant lesdits moyens (34) de couplage mécanique au contacteur (38), et
- une partie saillante amovible (22b) surmontant la partie de base (22a) et comportant la prise d'air frontale (44) et le conduit interne (42).

4. Le drone de la revendication 3, dans lequel la partie de base (22a) et la partie saillante (22b) coopèrent par emboitement avec un ajustement fonctionnel autorisant leur dissociation mutuelle en cas de contrainte extérieure excessive subie par la partie saillante (22b).

5. Le drone de la revendication 3, dans lequel la partie de base (22a) s'étend partiellement à l'intérieur du module (24) et partiellement à l'extérieur du module (24), et la partie saillante (22b) s'étend totalement à l'extérieur du module (24).

6. Le drone de la revendication 5, dans lequel la partie de base (22a) s'étend totalement à l'intérieur du fuselage (12).

7. Le drone de la revendication 3, dans lequel la partie de base (22a) comprend un support pour ledit organe luminescent (52).

8. Le drone de la revendication 7, dans lequel la partie saillante (22b) est une partie en un matériau (54) translucide ou transparent formant ledit guide de lumière, différent du matériau formant la partie de base (22a).

9. Le drone de la revendication 3, dans lequel ledit orifice (46) du conduit interne (42) débouche de la pièce tubulaire (22) vers le volume intérieur du module (24) au niveau de la liaison de la partie saillante (22b) à la partie de base (22a).

## Patentansprüche

1. Fliegende Drohne (10), umfassend einen Rumpf (12) und ein Aufbauelement, das ein abgeflachtes röhrenförmiges Teil (22) umfasst, das von dem Rumpf der Drohne vorspringend montiert ist, wobei das röhrenförmige Teil (22) Folgendes umfasst:
- ein proximales Ende (26), das Mittel zur Montage an der Drohne umfasst;
- ein freies distales Ende (28) mit einer frontalen Staudruck-Lufthutze für eine Staudrucksonde (44)
- eine innenliegende Rohrleitung (42) in Strömungsverbindung mit der frontalen Lufthutze (44), wobei diese Rohrleitung eine Öffnung (46) hat, die an dem proximalen Ende gebildet ist und mit einem Drucksensor verbunden ist, der in einem Modul (24) montiert ist, das in dem Rumpf (12) der Drohne ausgestaltet ist; und
- einen Lichtleiter (54) in Lichtverbindung mit einem Lumineszenzorgan (52), das in der Nähe oder im Bereich des proximalen Endes (26) des röhrenförmigen Teils (22) montiert ist,
**dadurch gekennzeichnet, dass** das röhrenförmige Teil (22) ein Teil ist, das relativ zu dem Rumpf (12) zwischen zwei vorbestimmten Positionen beweglich ist, wobei das röhrenförmige Teil (22) an seinem proximalen Ende Mittel (34) für die mechanische Ankopplung an ein Schütz (38) aufweist, das in dem Modul (24) montiert ist, wobei die Ankopplungsmittel (34) in der Lage sind, das Schütz (38) zwischen zwei unterschiedlichen Zuständen zu aktivieren, die den zwei jeweiligen Positionen entsprechen.

2. Drohne nach Anspruch 1, wobei das röhrenförmige Teil (22) ein Teil ist, das in vertikaler Translation (32) zwischen zwei vorbestimmten Positionen entlang einer Normalenrichtung zu dem Rumpf (12) in der Region des proximalen Endes (26) beweglich ist.

3. Drohne nach Anspruch 1, wobei das röhrenförmige Teil (22) zwei Teile (22a, 22b) umfasst, die trennbar in der Verlängerung des einen von dem anderen in Eingriff sind, mit
- einem Basisteil (22a), das auf permanente Weise mit dem Modul (24) verbunden ist und die Mittel (34) für die mechanische Ankopplung an das Schütz (38) trägt, und
- einem lösbaren vorspringenden Teil (22b), welches das Basisteil (22a) überragt und die frontale Lufthutze (44) und die innenliegende Rohrleitung (42) aufweist.

4. Drohne nach Anspruch 3, wobei der Basisteil (22a) und der vorspringende Teil (22b) durch Ineingriffnahme mit einer funktionalen Verbindung zusammenwirken, die deren gegenseitiges Lösen für den Fall übermäßigen äußeren Drucks, dem der vorspringende Teil (22b) ausgesetzt ist, gestatten.

5. Drohne nach Anspruch 3, wobei der Basisteil (22a) sich teilweise innerhalb des Moduls (24) und teilweise außerhalb des Moduls (24) erstreckt und der vorspringende Teil (22b) sich vollständig außerhalb des Moduls (24) erstreckt.

6. Drohne nach Anspruch 5, wobei der Basisteil (22a) sich vollständig innerhalb des Rumpfes (12) erstreckt.

7. Drohne nach Anspruch 3, wobei der Basisteil (22a) eine Halterung für das Lumineszenzorgan (52) umfasst.

8. Drohne nach Anspruch 7, wobei der vorspringende Teil (22b) ein Teil aus einem durchscheinenden oder transparenten Material (54) ist, das den Lichtleiter bildet, das von dem Material verschieden ist, das den Basisteil (22a) bildet.

9. Drohne nach Anspruch 3, wobei die Öffnung (46) der innenliegenden Rohrleitung (42) von dem röhrenförmigen Teil (22) zu dem inneren Volumen des Moduls (24) hin im Bereich der Verbindung des vorspringenden Teils (22b) mit dem Basisteil (22a) ausmündet.

## Claims

1. A flying drone (10) comprising a fuselage (12) and a superstructure element comprising a flat tubular part (22) mounted protrudingly with respect to the drone's fuselage, the tubular part (22) comprising:
- a proximal end (26) comprising means for its mounting on the drone;
- a free distal end (28) with a Pitot tube dynamic pressure front air intake (44);
- an inner duct (42) in fluid communication with the front air intake (44), this duct having an orifice (46) formed at the proximal end and connected to a pressure sensor mounted in a module (24) configured in the drone's fuselage (12); and
- a light guide (54) in light communication with a light-emitting member (52) mounted in the vicinity or at the proximal end (26) of the tubular part (22),
**characterized in that** the tubular part (22) is a part that is mobile with respect to the fuselage (12) between two predetermined positions, the tubular part (22) containing at its proximal end means (34) for its mechanical coupling to a contactor (38) mounted in the module (24), the coupling means (34) being adapted to activate the contactor (38) between two different states corresponding to said two respective positions.

2. The drone according to claim 1, wherein the tubular part (22) is a part (32) that is mobile in vertical translation between said two predetermined positions along a direction normal to the fuselage (12) in the region of the proximal end (26).

3. The drone according to claim 1, wherein the tubular part (22) comprises two portions (22a, 22b) separably nested into each other, in continuation of each other, with:
- a base portion (22a) permanently linked to the module (24) and carrying said means (34) for the mechanical coupling to the contactor (38), and
- a removable protruding portion (22b) placed above the base portion (22a), and including the front air intake (44) and the inner duct (42).

4. The drone according to claim 3, wherein the base portion (22a) and the protruding portion (22b) nestingly cooperate with a functional adjustment allowing their mutual dissociation in case of excessive external stress undergone by the protruding portion (22b).

5. The drone according to claim 3, wherein the base portion (22a) extends partially inside the module (24) and partially outside the module (24), and the protruding portion (22b) extends totally outside the module (24).

6. The drone according to claim 5, wherein the base portion (22a) extends totally inside the fuselage (12).

7. The drone according to claim 3, wherein the base portion (22a) comprises a support for said light-emitting member (52).

8. The drone according to claim 7, wherein the protruding portion (22b) is a portion made of a translucent or transparent material (54) forming said light guide, different from the material forming the base portion (22a).

9. The drone according to claim 3, wherein said orifice (46) of the inner duct (42) goes from the tubular part (22) to the internal volume of the module (24) at the connection of the protruding portion (22b) to the base portion (22a).
